# FASCICULE DE BREVET EUROPEEN

(11) **EP 2 405 760 B1**
(45) Date de publication et mention de la délivrance du brevet: **19.06.2019**
(21) Numéro de dépôt: 10712455.4
(22) Date de dépôt: 12.03.2010
(51) Int. Cl.: A01N 65/36, A01P 17/00, A01N 65/00, A01N 43/12

(54) **EXTRAIT D'EUODIA SUAVEOLENS SCHEFF, COMPOSITIONS REPULSIVES ET LEUR UTILISATION**
EXTRAKT AUS EUODIA SUAVEOLENS SCHEFF, REPELLENT-ZUSAMMENSETZUNGEN UND IHRE VERWENDUNG
EXTRACT OF EUODIA SUAVEOLENS SCHEFF, REPELLENT COMPOSITIONS, AND USE THEREOF

(30) Priorité: 12.03.2009 FR 0901145
(43) Date de publication de la demande: 18.01.2012
(73) Titulaire: Charabot, 06131 Grasse (FR)
(72) Inventeur: HUMBERT, Marina, 06130 Grasse (FR); LAVOINE-HANNEGUELLE, Sophie, 06370 Mouans Sartoux (FR)
(74) Mandataire: Macquet, Christophe
(86) Numéro de dépôt international: PCT/FR2010/000209
(87) Numéro de publication internationale: WO 2010/103207

(56) Documents cités:
- STETTER, HERMANN ET AL: "Synthesis of evodone and menthofuran" CHEMISCHE BERICHTE , 93, 603-7 CODEN: CHBEAM; ISSN: 0009-2940, 1960, XP002586992
- YAGHMAI, MOHAMMAD SHAHRAM ET AL: "The essential oil of Dracocephalum kotschyi Boiss" FLAVOUR AND FRAGRANCE JOURNAL , 3(1), 33-6 CODEN: FFJOED; ISSN: 0882-5734, 1988, XP002586993
- ANONYMOUS: "Evodia suaveolens Scheff -Zodia" INTERNET ARTICLE, [Online] 30 juillet 2008 (2008-07-30), XP002549637 Extrait de l'Internet: URL:http://anekaplanta.wordpress.com/2008/ 07/30/evodia-suaveolens-scheff-zodia/> [extrait le 2009-10-06]
- ANONYMOUS: "ZODIA - Mosquito Repellent Plant" INTERNET ARTICLE, [Online] 21 septembre 2007 (2007-09-21), XP002549638 Extrait de l'Internet: URL:http://web.archive.org/web/20070921115 901/http://sl.biotrop.org/product_detail.p hp?id_produk=9> [extrait le 2009-10-06]

## Description

L'invention concerne un extrait obtenu à partir des parties aériennes de la plante *Euodia suaveolens* Scheff, des compositions répulsives, ainsi que leur utilisation non-thérapeutique pour repousser les insectes, en particulier, les moustiques et, plus particulièrement, les moustiques européens/méditerranéens de l'espèce *Aedes aegypti.*

Les changements environnementaux, climatiques et sociétaux en Europe et dans les pays du Sud influent sur la distribution et la dynamique des agents pathogènes et de leurs vecteurs contribuant ainsi à l'émergence/réémergence de maladies telles que le paludisme, la dengue ou le virus du Nil, dont les impacts économiques et sanitaires sont considérables.

La lutte anti-vectorielle constitue la meilleure stratégie de prévention de masse applicable à la plupart des endémies tropicales transmises par les insectes, en particulier celles transmises par les moustiques. En effet, pour certaines maladies comme le paludisme, la fièvre jaune, les encéphalites virales, la dengue, la maladie de Chagas et, plus récemment, le chikungunya, il n'existe ni vaccin, ni moyen curatif immédiatement efficace.

Ainsi, les stratégies utilisées pour réduire l'incidence des maladies à transmission vectorielle ont porté sur l'élimination ou le contrôle des populations de vecteurs par des moyens chimiques et biologiques tels que les insecticides, et sur la protection personnelle principalement sous forme de produits répulsifs. Ces derniers font notamment l'objet d'un regain d'intérêt en santé publique. L'utilisation de répulsifs peut également devenir une mesure de protection personnelle efficace dans les zones où la biologie et le comportement des vecteurs rendent moins favorables l'utilisation de méthodes conventionnelles telles que des matériaux imprégnés, ou la pulvérisation d'insecticides, comme en Asie du Sud Est ou dans l'Océan indien.

Toutefois, les insecticides sont connus pour être toxiques et peuvent irriter les voies respiratoires, les yeux et la peau, ou provoquer des troubles du système nerveux ou gastro-intestinal, ou encore s'accumuler dans les tissus graisseux chez l'Homme.

De ce fait, on préfère l'utilisation de répulsifs, substances chimiques de synthèse ou naturelles, capables de provoquer un chimiotropisme négatif chez les animaux nuisibles. Les répulsifs sont également appelés insectifuges ou « anti-moustiques ». Ils ne tuent généralement pas les insectes mais les éloignent. Les répulsifs provoquent, chez l'insecte, une altération de la conduite de repérage, le détournant de sa cible potentielle.

De nombreux stimuli (visuels, thermiques, olfactifs) interviennent chez les insectes pour localiser leur proie. Aussi, à ce jour, on ne connaît pas encore exactement le mécanisme d'action des répulsifs. De plus, peu d'études d'efficacité et de toxicité à long terme ont été réalisés sur les répulsifs.

De manière générale, il est connu que les huiles essentielles ont un pouvoir répulsif plus faible que les produits de synthèse.

L'efficacité d'un répulsif dépend de sa concentration, de l'insecte cible, de l'excipient (volatilité, libération prolongée...) mais aussi de nombreux autres facteurs environnementaux.

Parmi les répulsifs chimiques, on connaît notamment les produits à base de DEET (N,N-diéthyl-3-méthylbenzamide ou N,N-diéthyl-m-toluamide) de structure chimique suivante :

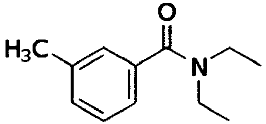

Ce composé synthétique est connu comme étant le répulsif le plus communément utilisé sur le marché et le plus efficace. Environ 200 millions de personnes font usage du DEET chaque année et plus de 8 milliards de doses ont été appliquées au cours des cinquante dernières années. Il a été démontré que le DEET bloque la réponse électrophysiologique des neurones sensoriels des insectes qui interviennent dans l'attirance olfactive. Il offre une durée de protection variant généralement entre 2 et 8 heures suivant les composés avec lesquels il est éventuellement associé dans les produits et surtout suivant sa concentration. Par exemple, il offre une durée de protection de plus de 5 heures, pour du DEET dosé à 23,8%, selon une étude réalisée en laboratoire sur *Aedes aegypti* (Fradin MS, Day JF « Comparative efficacy of insect repellents against mosquito bites », New England Journal of Medicine, 2002).

Toutefois, le DEET a une odeur désagréable et persistante, présente une consistance graisseuse sur la peau, est irritant au niveau des yeux et des membranes muqueuses, et possède également un effet agressif sur certaines matières plastiques (montres, lunettes). Aussi, même s'il a été réenregistré par l'Environmental Protection Agency, il peut s'avérer toxique à une concentration supérieure à 30% notamment chez les enfants de moins de 12 ans, la femme enceinte et la femme allaitante. De plus, sa toxicité étant liée à sa perméabilité cutanée, le DEET étant absorbé à 30% de sa dose à travers la peau, et à sa capacité de stockage au niveau cutané, l'excrétion urinaire étant de 10 à 15% de sa dose, il peut être déconseillé de l'utiliser à une concentration supérieure à 30%.

Or, une concentration de moins de 30% en DEET est peu efficace contre les moustiques chez les personnes de plus de 12 ans, la concentration active étant de 30 à 50%.

Récemment, des études ont montré que le DEET pourrait augmenter la concentration d'acétylcholine dans la fente synaptique en inhibant l'acétylcholinestérase (Vincent Corbel et al. "Evidence for inhibition of cholinesterases in insect and mammalian nervous sytem by the insect repellent DEET". BMC Biology, Aug 2009.). L'acétylcholinesterase est une enzyme clé dans la transmission de l'influx nerveux. Une fois l'information transmise, le médiateur chimique l'acétylcholine est dégradée. L'inhibition de l'acétylcholinesterase entraîne une accumulation de l'acétylcholine qui maintient la transmission permanente de l'influx nerveux pouvant provoquer des tétanies musculaires.

Bien que les effets indésirables graves restent toutefois exceptionnels et sont souvent liés à un surdosage ou une utilisation excessive, cette découverte repose le problème de la sécurité d'utilisation du DEET et soulève l'hypothèse que le DEET présente un risque de toxicité nerveuse pour l'espèce humaine.

On connaît également l'icaridine ou KBR3023 ou 1-methylpropylester, qui est un répulsif chimique de synthèse, ayant la structure chimique suivante :

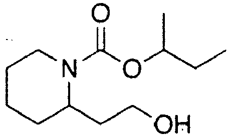

Elle est présentée comme ayant une efficacité comparable au DEET et cela à des concentrations inférieures (19,2% icaridine contre 30% DEET). L'icaridine est presque sans odeur, ne cause pas d'irritation cutanée mais seulement une légère irritation oculaire, et n'a pas d'effet indésirable sur les plastiques. L'utilisation de l'icaridine à des quantités efficaces entre environ 20 et 30% n'est toutefois pas conseillée chez l'enfant de moins de 30 mois et chez la femme enceinte.

Parmi les répulsifs de synthèse disponibles sur le marché, on connaît encore l'IR3535 ou éthyl-butyl-acétyl-aminopropionate, ayant la structure chimique suivante :

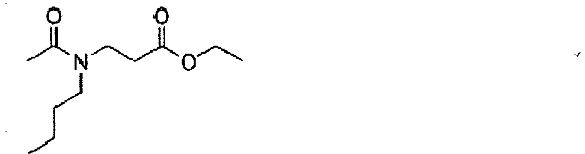

L'IR3535 a une concentration active entre 20 et 35%. Il est le seul répulsif chimique non déconseillé chez la femme enceinte. Ses toxicités aiguë et chronique sont faibles. D'après l'EPA, au regard de son utilisation pendant 20 ans en Europe sans effet indésirable significatif, le risque est considéré comme minime à nul. Toutefois, il s'avère moins efficace que le DEET, avec une efficacité moyenne de 4h pour de l'IR35/35 à plus de 20%.

On connaît d'autres répulsifs, tels que le citriodiol ou p menthane 3,8 diol (extrait d'origine naturelle d'Eucalyptus), le neem, ou le géraniol, qui sont des extraits naturels commercialisés. Ils s'avèrent efficaces, et peuvent offrir une protection d'une persistance en général d'au maximum 6 heures pour le citriodiol à 2 heures.

D'autres extraits naturels tels que par exemple les extraits du Spilanthes (*Acmella oleracea*) ou de poivre Sichuan (*Zanthoxylum piperitum*), peuvent également s'avérer efficaces comme répulsifs. Toutefois, les principes actifs du Spilanthes et de poivre Sichuan sont des alkylamides qui pourraient être irritants au niveau dermatologique à des concentrations de l'ordre de 15 à 20%.

Parmi les répulsifs naturels, on connaît également les huiles et essences essentielles, extraites par hydrodistillation et expression, notamment celles de géranium, d'ail, de lavande, ou encore la citronnelle, qui sont toutefois considérées comme peu efficaces, et offrent une protection d'une persistance d'environ 2 heures à 30 minutes, voire moins en fonction du vent et de la température extérieure. Ils requièrent des applications beaucoup plus fréquentes que pour les répulsifs synthétiques pour maintenir un niveau de protection efficace. Elles peuvent également s'avérer trop odorantes. Aussi, l'huile essentielle pure d'*Euodia suaveolens* Scheff apparaît, d'après les essais effectués par la Demanderesse, efficace mais très volatile et surtout très odorante et donc peu utilisable en tant que telle.

D'une manière générale, il existe une réelle demande quant à fournir des produits ou préparations avantageusement d'origine naturelle, beaucoup moins nocifs pour la santé humaine et biodégradables. Dans le contexte actuel, notamment dans le cadre de la réglementation des biocides, il est d'intérêt de trouver un répulsif naturel ou de synthèse, moins irritant et moins toxique, au moins aussi efficace que le DEET et l'icaridine, et ne présentant pas les effets indésirables des répulsifs selon l'art antérieur.

*Euodia suaveolens* Scheff est une plante de la famille des Rutaceae, mieux connue sous le nom de Zodia, ou encore Tanaman Zodia. Dans la littérature, environ 150 genres d'*Euodia* sont décrits et peut être plus de 1500 espèces, dont *Euodia suaveolens* Scheff, bien que les publications scientifiques concernant ce genre les nomment *Evodia.* Cette plante indonésienne est originaire de la région d'Irian dans l'ouest de la Papouasie-Nouvelle Guinée où elle est connue sous des noms locaux comme par exemple Halau nyamuk, Durian Hantu Hutan ou encore Sukang ou Sungei. On la trouve également sur l'île de Java et dans d'autres pays asiatiques. *Euodia suaveolens* Scheff est une plante arbuste touffue à feuillage persistant qui peut atteindre une hauteur comprise entre 0,3 et 3 mètres, en général 0,75 mètres. Ses feuilles fines, d'une couleur vert clair et d'aspect brillant, cireux et lisse, sont simples et linéaires, longuement pétiolées et peuvent atteindre une longueur de 20 à 30 cm pour un feuillage mature. Leur nervure centrale est saillante sur la face inférieure. Elles possèdent un goût amer. Ses fleurs sont jaune pâle, disposées en grappes et s'épanouissent en été. Cette plante dégage une odeur puissante aromatique.

*Euodia suaveolens* Scheff est utilisée depuis de nombreuses années en médecine traditionnelle par les habitants des zones où cette plante est cultivée. Ses feuilles sont notamment utilisées pour lutter contre la malaria et d'autres maladies vectorisées par les moustiques comme la dengue. Il semblerait aussi que les blessures dues aux attaques de moustiques contaminés guérissent plus rapidement lorsqu'elles sont mises en contact avec le feuillage de cette plante.

On a également décrit l'activité répulsive de moustiques vecteurs de la dengue des feuilles d'*Euodia suaveolens* après frottement sur la peau (Agus Kardinan, 2005, Services Laboratory, Seameo Biotrop, Zodia - Mosquito repellent plant). L'analyse par chromatographie en phase gazeuse de l'huile essentielle obtenue à partir des feuilles de cette plante menée par le Balai Penelitian Tanaman Rempah dan Obat (Baittro) a mis en évidence la présence de 46% de linalool ayant la structure chimique suivante 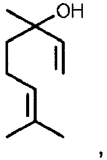 et 13,26% d'alpha-pinène ayant la structure chimique suivante 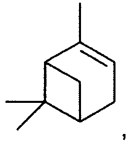 molécules considérées comme répulsifs par certains chercheurs. La littérature révèle également, selon l'opinion d'autres chercheurs, que cette activité répulsive serait due à l'évodiamine ayant la structure chimique suivante 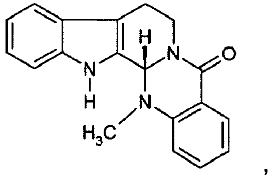 et à la rutaecarpine ayant la structure chimique suivante 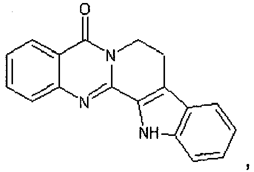 présentes dans les feuilles d'*Euodia suaveolens.*

Malgré ces enseignements, il est à constater qu'il n'a jamais été rapporté, ni même suggéré, un effet répulsif contre les insectes, et notamment les moustiques, pour des extraits d'*Euodia suaveolens* Scheff, notamment dépourvus d'une quantité efficace de linalool, alpha-pinène, évodiamine ou encore rutaecarpine.

Considérant ce qui précède, un problème que se propose de résoudre l'invention est de mettre en oeuvre un répulsif naturel ou de synthèse, apte à repousser aussi efficacement les insectes qu'un insectifuge chimique de synthèse connu, et qui ne présente pas les effets indésirables observés dans l'art antérieur.

Ainsi, dans l'optique de satisfaire ce besoin, la demanderesse a découvert, de manière inattendue, que des extraits issus d'*Euodia suaveolens* Scheff, ne contenant pas de linalool, alpha-pinène, évodiamine et/ou rutaecarpine ou, du moins, pas dans une quantité efficace, présentaient une remarquable activité de répulsion contre les insectes, en particulier, les moustiques et, plus particulièrement, les moustiques européens/méditerranéens de l'espèce *Aedes aegypti,* procurant ainsi une nouvelle réponse pour la protection contre les insectes, tout en respectant l'environnement et la santé humaine. La demanderesse a également identifié plus particulièrement l'agent actif responsable d'une telle activité répulsive.

L'extrait et l'agent répulsif selon l'invention offrent notamment les avantages suivants par rapport à l'art antérieur :
- l'extrait est naturel ;
- l'extrait et l'agent actif ont une activité répulsive contre les insectes, en particulier, contre les moustiques et, plus particulièrement, contre les moustiques européens/méditerranéens de l'espèce *Aedes aegypti* plus efficace que les extraits naturels de l'art antérieur ;
- l'extrait et l'agent actif, suivant leur concentration, ont une activité répulsive aussi efficace que les répulsifs chimiques et, plus particulièrement, le DEET ;
- l'agent actif peut être utilisé à faible dose ; et
- l'extrait et les compositions comprenant un tel agent actif ne présentent pas les effets indésirables des insecticides et des insectifuges chimiques.

L'invention a donc pour premier objet un extrait d'*Euodia suaveolens* Scheff, caractérisé en ce qu'il est obtenu à partir des parties aériennes de la plante au moyen d'au moins une étape d'extraction par un solvant organique ou hydroalcoolique, en ce qu'il comprend de l'évodone en une concentration comprise entre 0,1 et 35% en poids du poids total de l'extrait et en ce qu'il présente une activité répulsive contre les insectes.

De plus, la solution de l'invention a pour deuxième objet l'utilisation non-thérapeutique d'une composition, caractérisée en ce qu'elle comprend, dans un milieu cosmétiquement acceptable, de l'évodone à une concentration comprise entre 0,1 et 25% en poids du poids total de la composition, pour repousser les insectes.

L'invention a également pour troisième objet l'utilisation non-thérapeutique de l'évodone comme agent actif destiné à repousser les insectes, en particulier, les moustiques et, plus particulièrement, les moustiques européens/méditerranéens de l'espèce *Aedes aegypti.*

L'invention et les avantages qui en découlent seront mieux compris à la lecture de la description et des modes de réalisation non limitatifs qui suivent, rédigée au regard des figures annexées, dans lesquelles :
- la figure 1 est un chromatogramme en 3D obtenu par chromatographie sur couche mince à haute performance (HPTLC) à 280 nm réalisée à l'aide d'un scanner qui révèle la présence d'évodone dans différents extraits d'*Euodia suaveolens* Scheff ;
- la figure 2 est une lecture à 254 nm avant révélation d'un chromatogramme HPTLC, présentant différents extraits d'*Euodia suaveolens Scheff* et révélant l'absence, ou simplement la présence de traces, de rutaecarpine et d'évodiamine dans les extraits selon l'invention ;
- la figure 3 est un profil chromatographique obtenu par chromatographie en phase gazeuse avec détection en ionisation de flamme sur colonne polaire qui caractérise la composition au moins partielle d'un extrait d'*Euodia suaveolens* Scheff selon l'invention ;
- la figure 4 est une lecture d'un chromatogramme HPTLC après révélation en visible, présentant différents extraits d'*Euodia suaveolens Scheff* et révélant la présence d'évodone dans les extraits selon l'invention ; et
- la figure 5 est une lecture d'un chromatogramme HPTLC après révélation en visible, présentant différents extraits d'*Euodia suaveolens Scheff* et révélant la présence d'évodone dans les extraits selon l'invention.

Dans cette description, à moins qu'il ne soit spécifié autrement, il est entendu que, lorsqu'un intervalle de concentration est donné, il inclut les bornes supérieure et inférieure dudit intervalle, et la concentration est donnée en poids du poids total de la composition ou de l'extrait concernés.

L'extrait d'*Euodia suaveolens* Scheff selon l'invention est isolé à partir des parties aériennes de la plante.

Par parties aériennes de la plante, on entend les tiges, les feuilles et les fleurs de la plante. Elles peuvent être utilisées fraiches ou séchées, avantageusement séchées.

Pour l'obtention de l'extrait selon l'invention, les parties aériennes d'*Euodia suaveolens* Scheff sont avantageusement récoltées, séchées et grossièrement broyées.

Au moins une étape d'extraction est ensuite mise en oeuvre à l'aide de solvants organique ou hydroalcoolique. Cette étape d'extraction est différente d'une étape d'extraction pour l'obtention d'une huile essentielle ou d'une essence qui est strictement obtenue par hydrodistillation ou par expression.

L'extraction est avantageusement renouvelée plusieurs fois, par exemple 3 fois.

Elle est réalisée suivant un ratio plante/solvant d'extraction, en poids/volume, compris entre environ 1/1 et environ 1/20, par exemple 1/5 ou 1/10.

Selon l'invention, la température du solvant d'extraction est supérieure ou égale à environ 15°C soit la température ambiante. Avantageusement, la température d'extraction maximale est la température de reflux du solvant d'extraction. Par exemple, on réalise une extraction à 75°C avec l'éthanol.

Selon l'invention, l'extraction est avantageusement dynamique et se fait sous agitation.

Selon l'invention, le temps d'extraction est compris entre environ 30 minutes et environ 5 heures pour chaque étape d'extraction, par exemple 3 ou 4 heures.

A titre d'exemples non limitatifs de solvant organique selon l'invention, on peut citer les alcanes, les éther-oxydes, les esters, les alcools, les hydrocarbures halogènes, le dioxyde de carbone à l'état supercritique.

Le solvant organique selon l'invention est préférentiellement choisi parmi le pentane, l'hexane, l'heptane, l'octane, le cyclohexane, le tétrahydrofurane, le dioxane, le diéthyléther, l'acétate d'éthyle, l'acétate d'isopropyle, le méthanol, l'éthanol, le propanol, l'isopropanol, le butanol, la méthyléthylcétone, la diméthylcétone, la méthylisobutylcétone, le dichlorométhane, le diméthyl carbonate ou le dioxyde de carbone à l'état supercritique ou un mélange de solvants cités ci-dessus, préférentiellement l'hexane et l'éthanol.

Avantageusement, le solvant organique est choisi parmi les solvants bio, par exemple les alcools et le dioxyde de carbone à l'état supercritique.

Selon l'invention, le solvant hydroalcoolique est par exemple un solvant de dilution éthanol/eau dans un rapport 80/20 en volume.

Dans la préparation d'un extrait selon l'invention, on procède ensuite à une séparation de la phase solide et de la phase liquide. Les parties solides de la plante sont ainsi séparées du jus d'extraction liquide par filtration sur plaque ou par centrifugation, pressage.

Le filtrat ainsi obtenu est alors concentré par évaporation, de sorte à obtenir un extrait plus ou moins concentré, éventuellement jusqu'à évaporation totale du solvant d'extraction.

Avantageusement, le filtrat peut être concentré par évaporation sous vide.

L'extrait concentré, de couleur vert marron foncé, peut ensuite être décoloré ou raffiné par charbon actif, ou par des terres acides ou argiles ou par distillation moléculaire ou encore par extraction au dioxyde de carbone à l'état supercritique ou par codistillation.

L'extrait selon l'invention peut alors être purifié. Il peut être purifié par toute technique connue de l'homme de l'art, telle que par exemple par extraction phase liquide / phase liquide entre deux solvants non miscibles, par absorption sur un support tel que de la silice ou une résine échangeuse d'ions, par précipitation, ou par cristallisation.

Le rendement massique de l'extrait est compris entre environ 1% et environ 25% de matière sèche engagée, par exemple d'environ 15%.

Selon l'invention, différents types d'extraction peuvent être réalisés comme la macération (extraction statique à température ambiante), l'extraction statique à chaud, la décoction, la lixiviation.

Selon un mode de réalisation avantageux de l'invention, d'un point de vue quantitatif au niveau du rendement, on réalise une extraction Soxhlet ou encore une extraction dynamique, macération, extraction statique à chaud, extraction ultra sons, ou une extraction micro onde avec de l'éthanol à une concentration supérieure à environ 80%, par exemple 80%, 96% ou 97%.

Après purification, l'extrait selon l'invention peut être séché par évaporation totale du solvant puis mis en solution dans un solvant compatible, et cosmétiquement acceptable.

Une autre caractéristique dudit extrait est qu'il ne contient pas de linalool, d'alpha-pinène, d'évodiamine ou de rutaecarpine ou, du moins, pas dans une quantité efficace selon l'art antérieur. En effet, si ces composés sont présents dans la plante, l'extrait ou l'oléorésine obtenus à partir de cette plante ne contiennent qu'une faible quantité de linalool et d'alpha pinène et pas d'évodiamine ni de rutaecarpine.

Aussi, l'extrait selon l'invention n'est pas ou très peu titré en ces molécules, par exemple une teneur inférieure à 1%, de préférence inférieure à 0,1%, et ne contient donc que des traces de ces molécules. En effet, le linalool et l'alpha pinène sont notamment éliminés au cours de l'extraction organique ou hydroalcoolique de l'extrait selon l'invention. Ces molécules sont entrainées par la distillation du solvant et sont diluées par concentration de l'extrait. Pour l'évodiamine et la rutaecarpine, le solvant utilisé pour l'extraction selon l'invention n'est pas sélectif pour ces types de structures alcaloïdes. L'extrait selon l'invention testé sur les moustiques européens/méditerranéens de l'espèce *Aedes aegypti* ne contient donc plus ou simplement des traces de ces quatre molécules. Les propriétés affichées par un tel extrait selon l'invention ne sont donc pas imputables à la présence de telles substances.

L'extrait selon l'invention, qui constitue en lui-même un produit nouveau, contient en revanche des composés non volatils tels que des flavonoïdes, par exemple des flavanols glycosylés tels que la rutine ou 3 O-rutinosylquercétol, des flavonols tels que le kaempférol et l'isorhamnétine ou méthyl-3-quercétine, une flavone telle qu'un dérivé de l'apigenine comme la vitexine ou vitexine 2"O rhamnoside, ainsi que des composés volatils tels que des lactones bicycliques et notamment l'évodone ou (6S)3-6 dimethyl 6,7 dihydro 5H benzofuran-4-one, la menthalactone ou mintfuranone ou 3,6-dimethyl-5,6,7,7a-tetrahydro-4H-1-benzofuran-2-one, l'aromacurcumène, et des acides gras de type notamment acide palmitique ou oléique.

L'extrait selon l'invention est en particulier titré en évodone, ayant la structure chimique suivante :

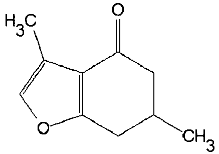

L'évodone est un monoterpène oxygéné, une benzofuranone dérivant du menthofurane. On la retrouve notamment décrite chez *Euodia hortensis* (Rutaceae). La plante *Calamintha ashei* (Lamiaceae) renferme également des monoterpènes oxygénés comme l'évodone, le caryophyllène, le menthofurane, la calaminthone. Ces composés ont été étudiés pour leurs propriétés allélopathiques sur l'inhibition de la germination des graines de certaines espèces comme *Lactuca sativa* et *Schizachyrium scoparium.* Le mélange de ces terpènes apparaît inhiber la germination des graines, mais les composés individuels ne semblent pas montrer une activité significative.

La synthèse de l'évodone peut être réalisée à partir de la 5-methylcyclohexan 1,3-dione en présence de chloroacétone. (A srikrisma and G Veera Raghava Sharma, "A simple synthesis(+/-) evodone", Indian journal of Chemistry, 1989, p.852). De l'évodone pure (mélange racémique) à 99% a ainsi été obtenue.

L'extrait selon l'invention est avantageusement titré en évodone en une concentration comprise entre environ 0,1 et 35% en poids du poids total de l'extrait, préférentiellement entre 0,2 et 5%.

A titre d'exemple, une oléorésine brute non raffinée selon l'invention peut comprendre entre 0,1 et 35% d'évodone, par exemple 0,8% pour un extrait brut non raffiné et 20,16% avec une reprise hexanique de l'oléorésine codistillée, et un extrait raffiné codistillé peut comprendre entre 0,1 et 20% d'évodone, par exemple 2%

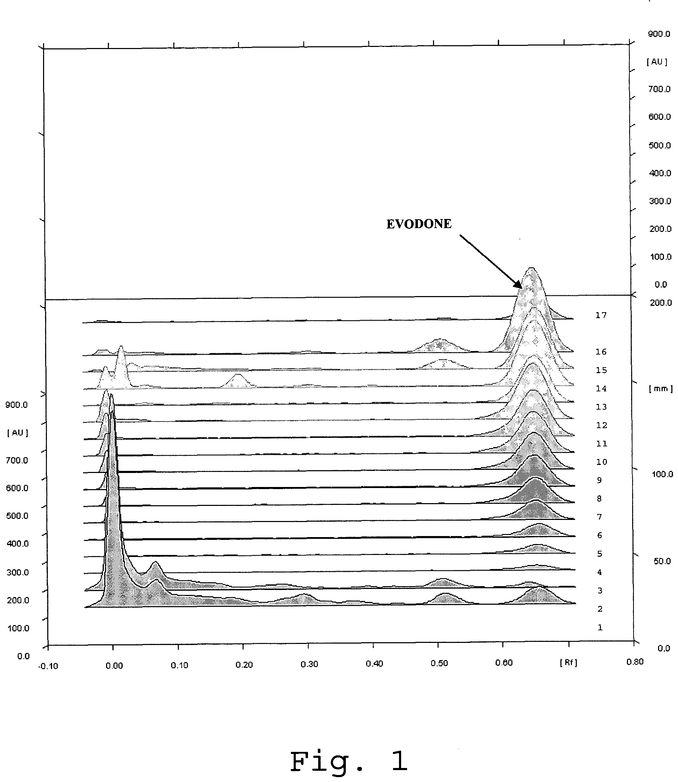

Tel qu'illustré aux figures 1, et 3 à 5, l'évodone est présente dans un extrait d'*Euodia suaveolens* Scheff selon l'invention.

Dans la figure 1, les chromatogrammes 3 à 14 représentent le standard évodone déposé à une même concentration à différents volumes, et sont caractérisés par la présence d'un pic ayant une référence (rapport frontal) de 0,69 pour cette phase mobile dans ce cas précis d'analyse. On observe la présence de ce même pic caractéristique de l'évodone dans les chromatogrammes 1, 2, 15, 16, 17 relatifs à des extraits d'*Euodia suaveolens* Scheff, à savoir respectivement dans une oléorésine obtenue à partir de feuilles fraîches, une oléorésine obtenue à partir de feuilles séchées, une formulation à base d'un extrait codistillé avec une teneur en évodone de 0,3%, une autre formulation à base d'un extrait codistillé avec une teneur en évodone de 2,36%, et une reprise hexanique de l'oléorésine codistillée.

Aussi, l'analyse de l'huile essentielle d'*Euodia suaveolens* Scheff, par comparaison entre l'huile essentielle et l'oléorésine extraite selon l'invention, met en évidence différents composés identifiés par chromatographie gazeuse couplée à la spectrométrie de masse.

Le tableau ci-dessous montre quelques composés précédemment cités et décrits selon certains auteurs comme étant responsables de l'activité répulsive (notamment l'alpha pinène et le linalool). Ce tableau met en évidence, d'après les résultats obtenus, l'absence dans l'oléorésine extraite selon l'invention, d'alpha pinène et de linalool notamment. L'oléorésine extraite selon l'invention conserve toutefois une activité répulsive marquée contre les moustiques.

| Composés | Teneur dans l'huile essentielle analysé en GC/FID | Teneur théorique en composés présents dans l'oléorésine, extraite selon l'invention | Teneur en composés analysés dans l'oléorésine, extraite selon l'invention en GC/FID |
|---|---|---|---|
| alpha pinène | 0,12% | 0,0086% | non détecté |
| Limonène | 18,77% | 1,13% | non détecté |
| Linalool | 0,08% | 0,00480% | non détecté |
| Menthofurane | 31,30% | 0,28% | non détecté |
| Limonène 10 ol | 6,21% | 0,38% | 2,28% |

A titre informatif, les teneurs théoriques données dans le tableau sont une extrapolation à partir d'analyses de l'huile essentielle. En effet, à partir de ces données, il est possible de déterminer la teneur théorique en ces composés dans la plante, puis dans l'oléorésine extraite selon l'invention.

Il convient toutefois de prendre en compte que l'oléorésine selon l'invention, est une extraction alcoolique suivie d'une concentration. Ainsi, lorsque le solvant est évaporé, la majorité de ces molécules, qui sont des molécules volatiles, sont entraînées principalement par azéotropie, ce qui explique le fait qu'elles ne se retrouvent plus dans l'extrait selon l'invention.

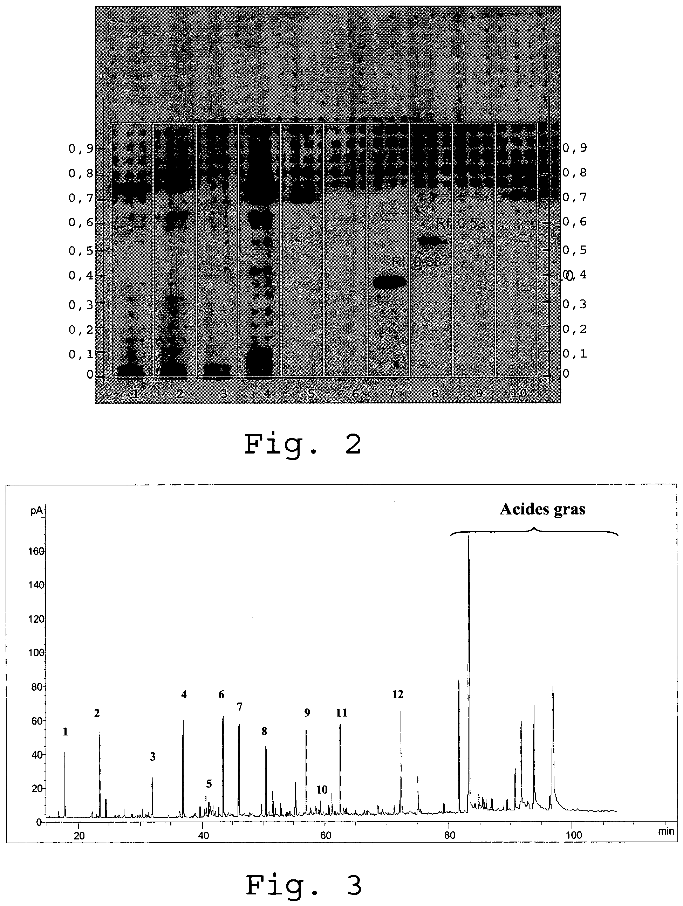

De plus, tel qu'illustré à la figure 2, la rutaecarpine et l'évodiamine ne sont pas présentes dans un extrait selon l'invention, ou simplement sous forme de traces.

En effet, dans la figure 2, différents extraits d'*Euodia suaveolens* Scheff ont été analysés : la piste 1 est relative à une concrète obtenue par extraction hexanique à partir de feuilles fraîches d'*Euodia suaveolens* Scheff ; la piste 2 est relative à une absolue obtenue par extraction alcoolique de la concrète ; la piste 3 est relative à une oléorésine décolorée selon l'invention ; la piste 4 est relative à un extrait selon l'invention décoloré par distillation moléculaire ; la piste 5 est relative à une huile essentielle d'*Euodia suaveolens* Scheff ; la piste 6 est vide ; la piste 7 correspond au standard évodiamine ayant pour référence (rapport frontal) 0,35-0,39, référencé 0,38 sur la figure 2, dans ces conditions analytiques ; la piste 8 correspond au standard rutaecarpine ayant pour référence (rapport frontal) 0,53 dans ces conditions analytiques ; la piste 9 est vide ; et la piste 10 correspond au standard évodone.

On observe dans les pistes 3 et 4, l'absence d'une bande ayant pour référence 0,53 (rapport frontal) caractéristique de la présence de rutaecarpine dans ces extraits. Ainsi, les extraits selon l'invention déposés dans les pistes 3 et 4 sont dépourvus de rutaecarpine. On observe également dans les pistes 3 et 4, l'absence d'une bande significative ayant pour référence (rapport frontal) 0,38 caractéristique de la présence d'évodiamine dans ces extraits. On distingue seulement des traces qui pourraient indiquer la présence de traces d'évodiamine dans les extraits selon l'invention.

Aussi, tel qu'illustré à la figure 3, on a caractérisé par chromatographie GC/FID (Agilent Technologies HP 6890) sur colonne polaire (Varian CP8713 CP WAX 52 CB ; 50 m x 0.25 mm x 0.2 mm) suivant une progression de température de 70°C pendant 5 min, puis 2°C/min jusqu'à 240°C pendant 50 min pour un volume injecté de 1µl, la composition au moins partielle d'un extrait éthanolique décoloré d'*Euodia suaveolens* Scheff selon l'invention. Dans cet extrait, on observe des pics caractéristiques de la présence de benzaldéhyde (pic 1), de carbitol (pic 2), d'aroma curcumène (pic 3), d'alcool benzylique (pic 4), d'évodone (pic 5), de limonène-10-ol ou (p-mentha-1,8(10)-dien-10-ol) (pic 6), de lévojunénol (pic 7), de menthalactone isomère 1 (pic 9), de menthalactone isomère 2 (pic 10), de phytol (pic 12), et de pics caractéristiques de la présence d'acides gras.

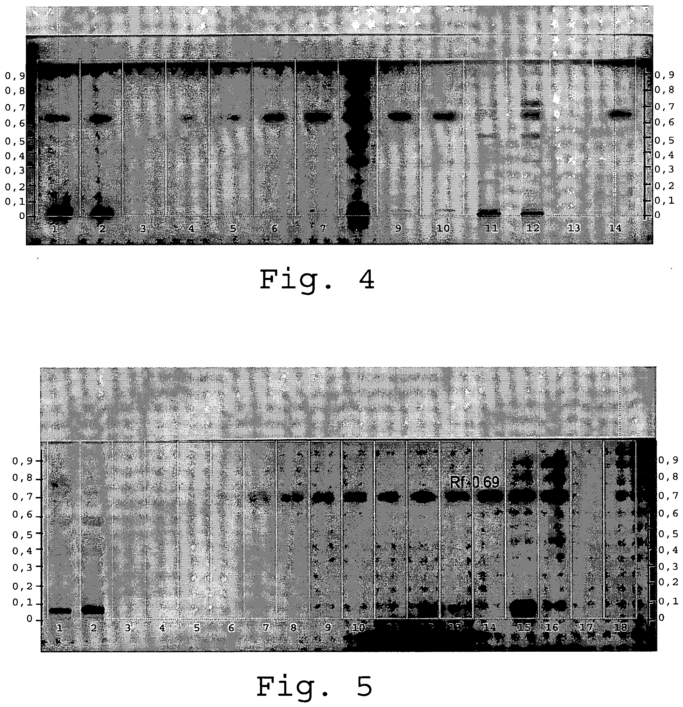

Tel qu'illustré à la figure 4, des analyses par HPTLC de l'évodone et de différents extraits d'*Euodia suaveolens* Scheff selon l'invention ont été réalisées : la piste 1 est relative à un extrait d'*Euodia suaveolens* Scheff obtenu par codistillation sur monopropylène glycol d'une oléorésine décolorée ; la piste 2 est relative à un extrait obtenu par codistillation sur monopropylène glycol d'une oléorésine non décolorée obtenue à partir de feuilles fraîches d'*Euodia suaveolens* Scheff ; les pistes 3 à 7 correspondent au standard évodone ; la piste 8 est relative à une oléorésine brute non raffinée obtenue par extraction éthanolique à partir de feuilles fraîches d'*Euodia suaveolens* Scheff ; les pistes 9 et 10 correspondent au standard évodone ; la piste 11 est relative à une oléorésine décolorée obtenue par extraction éthanolique à partir de feuilles sèches d'*Euodia suaveolens* Scheff ; la piste 12 est relative à une oléorésine décolorée obtenue par extraction éthanolique à partir de feuilles fraîches d'*Euodia suaveolens* Scheff ; la piste 13 est vide; la piste 14 correspond au standard évodone.

Ainsi, les extraits selon l'invention déposés dans les pistes 1, 2, 8, 11 et 12 contiennent bien de l'évodone.

Tel qu'illustré à la figure 5, des analyses par HPTLC de l'évodone et de différents extraits d'*Euodia suaveolens* Scheff selon l'invention ont été réalisées : la piste 1 est relative à une oléorésine brute non raffinée obtenue par extraction éthanolique à partir de feuilles sèches d'*Euodia suaveolens* Scheff ; la pistes 2 est relative à une oléorésine brute non raffinée obtenue par extraction éthanolique à partir de feuilles fraîches d'*Euodia suaveolens* Scheff ; les pistes 3 à 14 correspondent au standard évodone; les pistes 15 et 16 sont relatives à des formulations obtenues à partir d'extraits d'oléorésines codistillées ; la piste 17 est vide ; la piste 18 est relative à une extraction hexanique d'une oléorésine codistillée.

Ainsi, les extraits selon l'invention déposés dans les pistes 1, 2, 15, 16, 18 contiennent bien de l'évodone.

L'extrait selon l'invention est naturel. Avantageusement, l'extrait peut être certifié bio en utilisant des solvants d'extraction bio tels que par exemple les alcools ou le dioxyde de carbone à l'état supercritique.

L'extrait est biodégradable et n'est pas toxique. En effet, une étude de toxicité d'un extrait éthanolique d'*Euodia suaveolens* Scheff a été réalisée à une concentration de 100% pur, non décoloré, sur six rats femelle Sprague Dawley, âgés de 8 semaines et d'un poids compris entre 186g et 210g. Cette étude a débuté après une période d'acclimatation de 5 jours. L'ensemble des facteurs tels que la luminosité, la température et l'humidité ont été contrôlés. Les résultats sont obtenus par comparaison avec un groupe de rat contrôle ayant reçu uniquement du diméthyle sulfoxide. Chaque rat a reçu une dose unique efficace de 2000 mg/kg en poids du corps de l'extrait d'*Euodia suaveolens* Scheff pur, dilué dans du diméthyle sulfoxide et administré par voie orale, en particulier par gavage, selon un volume de 5 mL/kg en poids du corps. Selon les résultats obtenus, un tel extrait selon l'invention n'est pas toxique. Il présente en effet une DL50 supérieure à 2000 mg/kg en poids du corps. Selon la directive OCDE n°423, cette DL50 peut être considérée comme supérieure à 5000 mg/kg en poids du corps après administration par voie orale chez le rat.

A titre d'exemple d'extraction et d'obtention d'un extrait d'*Euodia suaveolens* Scheff, ou oléorésine, selon l'invention, on réalise en particulier les étapes ci-dessous.

Les feuilles et les fleurs d'*Euodia suaveolens* Scheff, préalablement séchées, sont d'abord broyées grossièrement.

600 g de plante non finement broyée sont ainsi introduits dans un ballon tricol de 20L placé dans un bain marie alimenté par de la vapeur.

L'extraction est réalisée avec de l'éthanol à 96%. On effectue 3 extractions.

La première extraction est réalisée avec un volume égal à 10 fois le poids de la plante broyée soit 6L. L'extraction est effectuée à reflux sous agitation mécanique pendant 3 heures, à une température de 75°C.

Ensuite, le filtrat obtenu est vidangé et collecté.

Une deuxième extraction est alors réalisée avec un volume égal à 6 fois la masse de plante initiale soit 3,6L, à reflux, sous agitation pendant 3 heures.

Puis une dernière extraction est effectuée avec un volume égal à 4 fois la masse initiale de plante soit 2,4L.

Les trois filtrats sont réunis, puis filtrés sur un filtre Büchner.

On obtient un extrait, limpide vert sombre.

L'extrait selon l'invention est ensuite concentré sous vide à l'aide d'un évaporateur rotatif, à une température de 60°C.

Une oléorésine selon l'invention, extraite d'*Euodia suaveolens* Scheff, vert foncé est ainsi obtenue. Elle a un aspect pâteux, solide à température ambiante et visqueux liquide à chaud.

L'extrait selon l'invention est ensuite décoloré au charbon actif dans une teneur de 10% en masse dans un mélange 80/20 éthanol/eau. L'extrait selon l'invention enfin obtenu est marron-rougeâtre, d'aspect brillant, soluble dans un mélange 80/20 éthanol/eau.

L'extrait selon l'invention est modérément odorant.

A titre d'alternative, l'extrait selon l'invention est décoloré au CO₂ supercritique.

Différents essais au CO₂ supercritique ont ainsi été réalisés sur l'oléorésine décrite précédemment, par exemple à une pression de 180 bar à une température de 45°C, ou à une pression de 250 bar à une température de 45°C avec 10% de co-solvant éthanolique.

L'essai au CO₂ sans co-solvant permet d'obtenir un extrait odorant jaune citron mais d'aspect hétérogène

L'extrait CO₂ avec un co-solvant éthanolique permet l'obtention d'un extrait marron rouge, moins odorant.

Selon un mode de réalisation préférentiel, l'oléorésine obtenue à partir de plantes fraîches est codistillée sur un support cosmétiquement acceptable comme le monopropylène glycol. Cette codistillation permet d'obtenir un extrait jaune pâle concentré en évodone, par exemple à environ 2%.

Cet extrait peut ensuite également étre repris à l'hexane pour augmenter le titre en évodone.

Selon un deuxième aspect, la présente invention s'étend également à l'utilisation non-thérapeutique d'une composition comprenant, dans un milieu cosmétiquement acceptable, de l'évodone à une concentration comprise entre 0,1 et 25% en poids du poids total de la composition, pour repousser les insectes.

Préférentiellement, la composition répulsive selon l'invention comprend de l'évodone à une concentration comprise entre 0,2 et 10% en poids du poids total de la composition, par exemple à une concentration de 3% en poids du poids total de la composition.

L'invention concerne également une composition comprenant, à titre d'agent actif répulsif contre les insectes, en particulier, contre les moustiques, une quantité efficace d'un extrait d'*Euodia suaveolens* Scheff tel que défini précédemment. Celui-ci est incorporé dans la composition avec tout excipient cosmétiquement acceptable. Une telle composition est substantiellement dépourvue d'une quantité efficace de linalool, alpha-pinène, évodiamine ou rutaecarpine, et est titrée en particulier en évodone en une concentration comprise entre 0,1 et 25% en poids du poids total de la composition.

Avantageusement, la teneur en extrait dans la composition ci-dessus est comprise entre environ 1 et environ 70% en poids par rapport au poids total de la composition, préférentiellement de 10,10, 26,8, 32 ou 35%.

Par exemple, une composition selon l'invention peut comprendre 35% d'un extrait éthanolique (solvant de dilution éthanol/eau : 80/20), 10,10% d'un extrait obtenu par codistillation monopropylène glycol, ou 26,8% d'un extrait obtenu par extraction alcoolique formulé avec de l'huile de ricin et de l'éthanol.

Les compositions selon l'invention peuvent être plus ou moins fluides et peuvent se présenter sous toutes les formes galéniques aptes à être utilisées pour une application topique sur la peau, par exemple, sous forme de lait, gel, crème, lotion, émulsion, spray, et préférentiellement sous la forme d'un spray.

A titres d'exemples de solvants utilisables dans la composition selon l'invention, on peut citer par exemple l'eau, l'éthanol, la glycérine, le propylène glycol, le sorbitol.

Ladite composition est susceptible de comprendre de manière facultative, un autre élément actif choisi parmi des agents pour lesquels il est reconnu un effet répulsif sur les insectes, préférentiellement un agent répulsif d'origine naturelle tel que par exemple le menthoglycol ou citriodiol.

Ce répulsif d'origine naturel est issu de l'huile essentielle d'*Eucalyptus citriodora.*

A titre d'illustration, il est mentionné ci-après quelques exemples de formulation de composition selon l'invention, contenant de l'évodone ou l'extrait d'*Euodia suaveolens* Scheff précité :
Exemple 1 : spray contre les moustiques européens/méditerranéens (*Aedes aegypti*) pour une application topique
   32% Extrait d'*Euodia suaveolens* Scheff
   1,3% Citriodiol
   65% Alcool 80%
   1,7% Monopropylène glycol
Exemple 2 : spray contre les moustiques européens/méditerranéens (*Aedes aegypti*) pour une application topique
   3% évodone
   63% Alcool 100%
   34% Monopropylène glycol
Exemple 3 : spray contre les moustiques européens/méditerranéens (*Aedes aegypti*) pour une application topique
   26,8% Extrait d'*Euodia suaveolens* Scheff
   33.5% huile de ricin
   39,7% Alcool 100%

Selon un troisième aspect, la présente invention concerne l'utilisation de l'évodone comme agent actif destiné à repousser les insectes, en particulier, les moustiques et, plus particulièrement, les moustiques européens/méditerranéens de l'espèce *Aedes aegypti.*

L'invention concerne également l'utilisation non-thérapeutique d'un extrait d'*Euodia suaveolens* Scheff comme agent actif ou de compositions tels que définis précédemment pour repousser les insectes, en particulier, les moustiques et, plus particulièrement, les moustiques européens/méditerranéens de l'espèce *Aedes aegypti.*

A ce titre, l'invention est illustrée, par les tests d'efficacité ci-après, réalisé en laboratoire, où les formules ne sont pas dégradées par abrasion, sudation, effet du soleil, effet de la température ou même du bain de mer. Ces tests visent à mettre en évidence l'effet répulsif de l'évodone et d'un extrait d'*Euodia suaveolens* Scheff à différentes concentrations, purifié, décoloré ou non, seul ou en combinaison avec un autre agent répulsif actif naturel tel que le menthoglycol, vis-à-vis des moustiques européens/méditerranéens *Aedes aegypti.*

Les essais sont effectués avec des femelles moustiques *Aedes aegypti* âgées de 6 à 10 jours ayant subi un jeûne préalable de 24 heures (pas de repas de sang) afin d'augmenter leur agressivité.

La cible du repas de sang est une souris type « hairless » maintenue dans une cage de contention (yeux protégés) et enduite du produit à tester (0,1g/60cm²) appliqué avec une pipette.

30 minutes après application du produit, la souris est introduite dans une cage contenant environ 200 moustiques femelles (élimination préalable des mâles par gradient de nourriture).

L'essai dure 5 minutes et durant ce délai, on enregistre le nombre de moustiques qui se sont posés sur la souris (effet « landing » : nombre de moustiques qui se posent sur la zone traitée et qui repartent sans avoir piqué) et le nombre de piqûres effectives.

L'essai est arrêté à partir de 5 piqûres effectives (« stop » dans les tableaux ci-après).

L'essai est recommencé avec de nouveaux lots de moustiques, à intervalles de temps d'une heure jusqu'à 8 heures selon la limite de persistance du produit (la souris est libérée entre-temps). En fonction de la première répétition, on réalise des répétitions avec des intervalles de temps de 30 minutes pour donner une limite plus précise de la durée de protection.

Pendant et entre les échéances, les souris sont maintenues dans une atmosphère de type « tropicale » en conditions contrôlées à 27+/-1°C et 70+/-5% d'humidité relative.

Les cages sont changées à chaque essai unitaire et espacées de 3 mètres.

3 répétitions sont menées par formule à tester et ce sur 3 souris différentes, soit 9 essais unitaires par formule.

### Test 1 :

4 extraits (fournisseur : Charabot S.A.) sont comparativement testés, le solvant servant de référence (on vérifie qu'il y a au moins 10 landings en 30 secondes pour valider l'essai) :
Extrait 1 : extrait éthanolique d'*Euodia suaveolens* Scheff selon l'invention à une concentration de 35% (solvant de dilution éthanol/eau : 80/20) non décoloré ;
Extrait 2 : extrait éthanolique de poivre Sichuan rouge (extraction soxhlet) à une concentration de 19,44% (solvant de dilution éthanol) ;
Extrait 3 : extrait éthanolique à une concentration de 35% en menthoglycol ;
Extrait 4 : extrait de Spilanthes à une concentration de 18,56% (solvant de dilution éthanol) ; et
Test sans produit (référence) : solvant.

Les résultats sont rassemblés dans le tableau suivant :

| **AEDES AEGYPTI** | souris | rep. | T0+2H | | T0+4H | | T0+6H | | T0+8H | | T0+10H | | T0+12H | |
|---|---|---|---|---|---|---|---|---|---|---|---|---|---|---|
| | | | P | L | P | L | P | L | P | L | P | L | P | L |
| Extrait 1 | 1 | 1 | 0 | 0 | 0 | 0 | 0 | 3 | stop | stop | stop | stop | stop | stop |
| | | 2 | 0 | 0 | 0 | 1 | 0 | 1 | stop | stop | stop | stop | stop | stop |
| | | 3 | 0 | 0 | 0 | 1 | 0 | 2 | stop | stop | stop | stop | stop | stop |
| | 2 | 1 | 0 | 0 | 0 | 0 | 0 | 1 | stop | stop | stop | stop | stop | stop |
| | | 2 | 0 | 0 | 0 | 0 | 0 | 2 | stop | stop | stop | stop | stop | stop |
| | | 3 | 0 | 0 | 0 | 0 | 0 | 4 | stop | stop | stop | stop | stop | stop |
| | 3 | 1 | 0 | 0 | 0 | 0 | 0 | 1 | stop | stop | stop | stop | stop | stop |
| | | 2 | 0 | 0 | 0 | 1 | 0 | 2 | stop | stop | stop | stop | stop | stop |
| | | 3 | 0 | 0 | 0 | 0 | 0 | 0 | stop | Stop | stop | stop | stop | stop |
| Extrait 2 | 1 | 1 | 0 | 0 | 0 | 1 | stop | stop | stop | stop | stop | stop | stop | stop |
| | | 2 | 0 | 0 | 0 | 2 | stop | stop | stop | stop | stop | stop | stop | stop |
| | | 3 | 0 | 0 | 0 | 0 | stop | stop | stop | stop | stop | stop | stop | stop |
| | 2 | 1 | 0 | 0 | 0 | 0 | stop | stop | stop | stop | stop | stop | stop | stop |
| | | 2 | 0 | 0 | 0 | 1 | stop | stop | stop | stop | stop | stop | stop | stop |
| | | 3 | 0 | 0 | 0 | 0 | stop | stop | stop | stop | stop | stop | stop | stop |
| | 3 | 1 | 0 | 1 | 0 | 1 | stop | stop | stop | Stop | stop | stop | stop | stop |
| | | 2 | 0 | 0 | 0 | 1 | stop | stop | stop | stop | stop | stop | stop | stop |
| | | 3 | 0 | 0 | 0 | 1 | stop | stop | stop | stop | stop | stop | stop | stop |
| Extrait 3 | 1 | 1 | 0 | 0 | 0 | 1 | 0 | 3 | stop | stop | stop | stop | stop | stop |
| | | 2 | 0 | 0 | 0 | 1 | 0 | 2 | stop | stop | stop | stop | stop | stop |
| | | 3 | 0 | 0 | 0 | 0 | 0 | 2 | stop | stop | stop | stop | stop | stop |
| | 2 | 1 | 0 | 0 | 0 | 0 | 0 | 0 | stop | stop | stop | stop | stop | stop |
| | | 2 | 0 | 0 | 0 | 1 | 0 | 2 | stop | stop | stop | stop | stop | stop |
| | | 3 | 0 | 0 | 0 | 0 | 0 | 1 | stop | stop | stop | stop | stop | stop |
| | 3 | 1 | 0 | 0 | 0 | 0 | 0 | 0 | stop | stop | stop | stop | stop | stop |
| | | 2 | 0 | 0 | 0 | 0 | 0 | 1 | stop | stop | stop | stop | stop | stop |
| | | 3 | 0 | 0 | 0 | 0 | 0 | 0 | stop | stop | stop | stop | stop | stop |
| Extrait 4 | 1 | 1 | 0 | 0 | 0 | 0 | stop | stop | stop | stop | stop | stop | stop | stop |
| | | 2 | 0 | 0 | 0 | 1 | stop | stop | stop | stop | stop | stop | stop | stop |
| | | 3 | 0 | 0 | 0 | 0 | stop | stop | stop | stop | stop | stop | stop | stop |
| | 2 | 1 | 0 | 0 | 0 | 1 | stop | stop | stop | stop | stop | stop | stop | stop |
| | | 2 | 0 | 0 | 0 | 3 | stop | stop | stop | stop | stop | stop | stop | stop |
| | | 3 | 0 | 0 | 0 | 1 | stop | stop | stop | stop | stop | stop | stop | stop |
| | 3 | 1 | 0 | 1 | 0 | 1 | stop | stop | stop | stop | stop | stop | stop | stop |
| | | 2 | 0 | 0 | 0 | 2 | stop | stop | stop | stop | stop | stop | stop | stop |
| | | 3 | 0 | 0 | 0 | 1 | stop | stop | stop | stop | stop | stop | stop | stop |

| | | | | | | | | | | | | | | |
|---|---|---|---|---|---|---|---|---|---|---|---|---|---|---|
| P : nombre de piqûres rép. : répétition L : "landing" = nombre de moustiques se posant sans piquer sur la zone traitée stop = l'essai est arreté lorsque l'on observe plus de 5 piqures | | | | | | | | | | | | | | |

Dans les conditions de cet essai, avec les échantillons fournis, les souches d'insectes et les méthodes considérées, les extraits 1 et 3 ont montré un effet répulsif vis-à-vis du moustique avec une persistance de 6 heures après application.

Les extraits 2 et 4, aux concentrations utilisées, ont montré un effet répulsif vis-à-vis du moustique présentant une persistance de seulement 4 heures après application.

L'extrait 1 d'*Euodia suaveolens* Scheff à une concentration de 35%, purifié, non décoloré, montre ainsi un réel effet répulsif d'une persistance de 6 heures vis-à-vis du moustique *Aedes aegypti.*

### Test 2 :

3 extraits (fournisseur : Charabot S.A.) sont comparativement testés, le solvant servant de référence (on vérifie qu'il y a au moins 10 landings en 30 secondes pour valider l'essai) :
Extrait 1 : extrait éthanolique d'*Euodia suaveolens* Scheff selon l'invention à une concentration de 15% décoloré par distillation moléculaire; (solvant de dilution éthanol/eau : 80/20) ;
Extrait 2 : extrait éthanolique d'*Euodia suaveolens* Scheff selon l'invention décoloré à une concentration de 35% (solvant de dilution éthanol 97%);
Extrait 3 : mélange menthoglycol (20%) + extrait d'*Euodia suaveolens* Scheff (15%) (solvant de dilution éthanol/eau : 80/20), décoloré ; et
Test sans produit (référence) : solvant.

Les résultats sont rassemblés dans le tableau suivant :

| **AEDES AEGYPTI** | souris | rep. | T0+2H | | T0+4H | | T0+6H | | T0+8H | | T0+10H | | T0+12H | |
|---|---|---|---|---|---|---|---|---|---|---|---|---|---|---|
| | | | P | L | P | L | P | L | P | L | P | L | P | L |
| Extrait 1 | 1 | 1 | 0 | 0 | 0 | 0 | stop | stop | stop | stop | stop | stop | stop | stop |
| | | 2 | 0 | 0 | 0 | 2 | stop | stop | stop | stop | stop | stop | stop | stop |
| | | 3 | 0 | 0 | 0 | 0 | stop | stop | stop | stop | stop | stop | stop | stop |
| | 2 | 1 | 0 | 0 | 0 | 0 | stop | stop | stop | stop | stop | stop | stop | stop |
| | | 2 | 0 | 0 | 0 | 1 | stop | stop | stop | stop | stop | stop | stop | stop |
| | | 3 | 0 | 0 | 0 | 0 | stop | Stop | stop | stop | stop | stop | stop | stop |
| | 3 | 1 | 0 | 0 | 0 | 0 | stop | Stop | stop | stop | stop | stop | stop | stop |
| | | 2 | 0 | 0 | 0 | 2 | stop | Stop | stop | stop | stop | stop | stop | stop |
| | | 3 | 0 | 0 | 0 | 0 | stop | Stop | stop | stop | stop | stop | stop | stop |
| Extrait 2 | 1 | 1 | 0 | 0 | 0 | 0 | 0 | 3 | stop | stop | stop | stop | stop | stop |
| | | 2 | 0 | 0 | 0 | 0 | 0 | 2 | stop | stop | stop | stop | stop | stop |
| | | 3 | 0 | 0 | 0 | 0 | 0 | 0 | stop | stop | stop | stop | stop | stop |
| | 2 | 1 | 0 | 0 | 0 | 0 | 0 | 0 | stop | stop | stop | stop | stop | stop |
| | | 2 | 0 | 0 | 0 | 0 | 0 | 1 | stop | stop | stop | stop | stop | stop |
| | | 3 | 0 | 0 | 0 | 0 | 0 | 0 | stop | stop | stop | stop | stop | stop |
| | 3 | 1 | 0 | 0 | 0 | 1 | 0 | 1 | stop | stop | stop | stop | stop | stop |
| | | 2 | 0 | 0 | 0 | 0 | 0 | 1 | stop | stop | stop | stop | stop | stop |
| | | 3 | 0 | 0 | 0 | 1 | 0 | 2 | stop | stop | stop | stop | stop | stop |
| Extrait 3 | 1 | 1 | 0 | 0 | 0 | 0 | 0 | 1 | stop | stop | stop | stop | stop | stop |
| | | 2 | 0 | 0 | 0 | 0 | 0 | 0 | stop | stop | stop | stop | stop | stop |
| | | 3 | 0 | 0 | 0 | 0 | 0 | 0 | stop | stop | stop | stop | stop | stop |
| | 2 | 1 | 0 | 0 | 0 | 0 | 0 | 0 | stop | stop | stop | stop | stop | stop |
| | | 2 | 0 | 0 | 0 | 0 | 0 | 1 | stop | stop | stop | stop | stop | stop |
| | | 3 | 0 | 0 | 0 | 0 | 0 | 1 | stop | stop | stop | stop | stop | stop |
| | 3 | 1 | 0 | 0 | 0 | 0 | 0 | 0 | stop | stop | stop | stop | stop | stop |
| | | 2 | 0 | 0 | 0 | 0 | 0 | 0 | stop | stop | stop | stop | stop | stop |
| | | 3 | 0 | 0 | 0 | 0 | 0 | 0 | stop | stop | stop | stop | stop | stop |
| test sans produit | 1 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |
| | 2 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |
| | 3 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |

| | | | | | | | | | | | | | | |
|---|---|---|---|---|---|---|---|---|---|---|---|---|---|---|
| P : nombre de piqûres rép. : répétition L : "landing" = nombre de moustiques se posant sans piquer sur la zone traitée stop = l'essai est arreté lorsque l'on observe plus de 5 piqures | | | | | | | | | | | | | | |

Dans les conditions de cet essai, avec les échantillons fournis, les souches d'insectes et les méthodes considérées, les extraits 2 et 3 ont montré un effet répulsif vis-à-vis du moustique avec une persistance de 6 heures après application.

L'extrait 1 a montré un effet répulsif vis-à-vis du moustique présentant une persistance de seulement 4 heures après application.

L'extrait 2 d'*Euodia suaveolens* Scheff à une concentration de 35%, purifié, décoloré, et l'extrait 3 comprenant un mélange de menthoglycol à 20% et d'un extrait d'*Euodia suaveolens* Scheff à 15% décoloré, montrent ainsi un réel effet répulsif d'une persistance de 6 heures vis-à-vis du moustique *Aedes aegypti.*

### Test 3 :

Un test est réalisé avec 4 compositions selon l'invention :
Extrait 1 : Extrait d'*Euodia suaveolens* Scheff codistillé formulé à 0,3% en évodone ;
Extrait 2 : Extrait d'*Euodia suaveolens* Scheff codistillé formulé à 2,36% en évodone ;
Extrait 3 : Composition comprenant de l'évodone de synthèse formulée à 3% ;
Extrait 4 : Oléorésine d'*Euodia suaveolens* Scheff brute non raffinée formulée à 0,26% en évodone.

Dans les conditions de cet essai, avec les échantillons fournis, les souches d'insectes et les méthodes considérées, les extraits ont montré un effet répulsif vis-à-vis du moustique avec des temps de protection après application de :
4h avec l'Extrait 1 ;
6h avec l'Extrait 2 ;
6h avec l'Extrait 3 ;
6h avec l'Extrait 4.

Un mélange racémique d'évodone de synthèse formulé à 3% (extrait 3) possède une activité répulsive pendant 6 heures. L'évodone peut être utilisée en tant qu'agent actif pour repousser les insectes, et en particulier les moustiques. L'évodone est donc responsable de l'activité répulsive ou du moins en partie de l'extrait d'*Euodia suaveolens* Scheff selon l'invention.

L'extrait 2 d'*Euodia suaveolens* Scheff comprenant 2,36% d'évodone a une activité répulsive plus efficace que l'extrait 1 *d'Euodia suaveolens* Scheff comprenant 0,3% d'évodone et obtenu dans les mêmes conditions par codistillation.

L'oléorésine d'*Euodia suaveolens* Scheff brute non raffinée formulée à 0,26% en évodone (extrait 4) est aussi efficace que les extraits 2 et 3. L'évodone est active en tant que telle et présente une synergie d'action dans l'oléorésine brute non raffinée. L'évodone agit peut être en synergie dans l'extrait brut selon l'invention avec des molécules telles que d'autres terpènes oxygénés comme la menthalactone, ou des molécules polaires non présentes dans les extraits codistillés.

Selon l'invention, l'évodone possède une activité répulsive contre les moustiques. Une concentration de 3% en évodone de synthèse voire moins dans des extraits d'*Euodia suaveolens* Scheff brut ou raffiné apparaît aussi efficace qu'une concentration de 30% de DEET.

L'homme du métier veillera à choisir le milieu cosmétiquement acceptable de manière à ce qu'il ne nuise pas aux propriétés intéressantes de l'extrait et des compositions répulsives selon l'invention.

Bien entendu, l'invention ne se limite pas aux modes de réalisation et aux exemples présentés ci-dessus et l'homme du métier, grâce à des opérations de routine, pourra être amené à réaliser d'autres modes de réalisation non décrits explicitement, qui entrent dans le cadre large de l'invention.

## Revendications

1. Extrait d'*Euodia suaveolens* Scheff, **caractérisé en ce qu'**il est obtenu à partir des parties aériennes de la plante au moyen d'au moins une étape d'extraction par un solvant organique ou hydroalcoolique, **en ce qu'**il comprend de l'évodone en une concentration comprise entre 0,1 et 35% en poids du poids total de l'extrait et **en ce qu'**il présente une activité répulsive contre les insectes.

2. Extrait selon la revendication 1, **caractérisé en ce que** la température du solvant d'extraction est supérieure ou égale à 15°C et la température d'extraction maximale est la température de reflux du solvant d'extraction.

3. Extrait selon l'une des revendications précédentes, **caractérisé en ce qu'**il est obtenu, après au moins une étape d'extraction, par séparation de la phase solide et de la phase liquide.

4. Extrait selon l'une des revendications précédentes, **caractérisé en ce qu'**il est concentré par évaporation du solvant d'extraction.

5. Extrait selon l'une des revendications précédentes, **caractérisé en ce qu'**il est décoloré ou raffiné.

6. Extrait selon l'une des revendications précédentes, **caractérisé en ce qu'**il est purifié.

7. Extrait selon l'une des revendications précédentes, **caractérisé en ce qu'**il comprend de l'évodone en une concentration comprise entre 0,2 et 5% en poids du poids total de l'extrait.

8. Extrait selon l'une des revendications précédentes, **caractérisé en ce qu'**il est une oléorésine.

9. Utilisation non-thérapeutique d'une composition comprenant, dans un milieu cosmétiquement acceptable, de l'évodone à une concentration comprise entre 0,1 et 25% en poids du poids total de la composition pour repousser les insectes.

10. Composition, **caractérisée en ce qu'**elle comprend, à titre d'agent actif répulsif contre les insectes, en particulier, contre les moustiques, une quantité efficace d'un extrait d'*Euodia suaveolens* Scheff tel que défini à l'une des revendications 1 à 8, et un excipient cosmétiquement acceptable.

11. Composition selon la revendication 10, **caractérisée en ce que** la teneur en extrait est comprise entre 10 et 60% en poids du poids total de la composition pour un extrait brut, et entre 1 et 35% pour un extrait raffiné codistillé.

12. Composition selon l'une des revendications 10 à 11, **caractérisée en ce qu'**elle est formulée pour être appliquée topiquement sur la peau sous forme de lait, gel, crème, lotion, émulsion, spray, préférentiellement de spray.

13. Utilisation non-thérapeutique de l'évodone comme agent actif destiné à repousser les insectes.

14. Utilisation non-thérapeutique d'un extrait d'*Euodia suaveolens* Scheff selon l'une des revendications 1 à 8, comme agent actif destiné à repousser les insectes.

15. Utilisation non-thérapeutique d'une composition selon l'une des revendications 10 à 12, pour repousser les insectes.

## Patentansprüche

1. Extrakt aus *Euodia Suaveolens Scheff*, **dadurch gekennzeichnet, dass** er aus den oberirdischen Teilen der Pflanze anhand mindestens eines Extraktionsschrittes durch ein organisches oder hydroalkoholisches Lösungsmittel erhalten wird, dadurch, dass er Evodon in einer Konzentration zwischen 0,1 und 35 Gew.-% des Gesamtgewichts des Extrakts umfasst, und dadurch, dass er eine Repellent-Aktivität gegen die Insekten aufweist.

2. Extrakt nach Anspruch 1, **dadurch gekennzeichnet, dass** die Temperatur des Extraktionslösungsmittels größer oder gleich 15 °C ist und die maximale Extraktionstemperatur die Rückflusstemperatur des Extraktionslösungsmittels ist.

3. Extrakt nach einem der vorstehenden Ansprüche, **dadurch gekennzeichnet, dass** er nach mindestens einem Extraktionsschritt durch Trennen der festen Phase von der flüssigen Phase erhalten wird.

4. Extrakt nach einem der vorstehenden Ansprüche, **dadurch gekennzeichnet, dass** er durch Verdampfen des Extraktionslösungsmittels konzentriert wird.

5. Extrakt nach einem der vorstehenden Ansprüche, **dadurch gekennzeichnet, dass** er entfärbt oder raffiniert ist.

6. Extrakt nach einem der vorstehenden Ansprüche, **dadurch gekennzeichnet, dass** er gereinigt ist.

7. Extrakt nach einem der vorstehenden Ansprüche, **dadurch gekennzeichnet, dass** er Evodon in einer Konzentration zwischen 0,2 und 5 Gew.-% des Gesamtgewichts des Extrakts umfasst.

8. Extrakt nach einem der vorstehenden Ansprüche, **dadurch gekennzeichnet, dass** er ein Ölharz ist.

9. Nichttherapeutische Verwendung einer Zusammensetzung, in einem kosmetisch annehmbaren Milieu Evodon in einer Konzentration zwischen 0,1 und 25 Gew.-% des Gesamtgewichts der Zusammensetzung umfassend, um Insekten abzuwehren.

10. Zusammensetzung, **dadurch gekennzeichnet, dass** sie als Repellent-Wirkstoff gegen die Insekten, insbesondere die Stechmücken, eine wirksame Menge eines Extrakts aus *Euodia Suaveolens Scheff* nach einem der Ansprüche 1 bis 8 und einen kosmetisch annehmbaren Hilfsstoff umfasst.

11. Zusammensetzung nach Anspruch 10, **dadurch gekennzeichnet, dass** der Gehalt an Extrakt zwischen 10 und 60 Gew.-% des Gesamtgewichts der Zusammensetzung für einen Rohextrakt, und zwischen 1 und 35% für einen raffinierten kodestillierten Extrakt enthalten ist.

12. Zusammensetzung nach einem der Ansprüche 10 bis 11, **dadurch gekennzeichnet, dass** sie formuliert ist, um topisch auf der Haut in Form von Milch, Gel, Creme, Lotion, Emulsion, Spray, vorzugsweise Spray, aufgetragen zu werden.

13. Nichttherapeutische Verwendung von Evodon als Wirkstoff, der dazu bestimmt ist, die Insekten abzuwehren.

14. Nichttherapeutische Verwendung eines Extrakts aus *Euodia Suaveolens Scheff* nach einem der Ansprüche 1 bis 8, als Wirkstoff, der dazu bestimmt ist, die Insekten abzuwehren.

15. Nichttherapeutische Verwendung einer Zusammensetzung nach einem der Ansprüche 10 bis 12, um die Insekten abzuwehren.

## Claims

1. Extract of *Euodia suaveolens* Scheff, **characterised in that** it is obtained from the airborne portions of the plant via at least one extraction step using an organic or hydro-alcoholic solvent, **in that** it comprises evodone in a concentration between 0.1 and 35% by weight relative to the total weight of the extract and **in that** it has an insect repellent activity.

2. Extract according to claim 1, **characterised in that** the temperature of the extraction solvent is greater than or equal to 15°C and the maximum extraction temperature is the reflux temperature of the extraction solvent.

3. Extract according to one of the preceding claims, **characterised in that** it is obtained, after at least one extraction step, by separation of the solid phase and of the liquid phase.

4. Extract according to one of the preceding claims, **characterised in that** it is concentrated via evaporation of the extraction solvent.

5. Extract according to one of the preceding claims, **characterised in that** it is discoloured or refined.

6. Extract according to one of the preceding claims, **characterised in that** it is purified.

7. Extract according to one of the preceding claims, **characterised in that** it comprises evodone in a concentration between 0.2 and 5% by weight relative to the total weight of the extract.

8. Extract according to one of the preceding claims, **characterised in that** it is an oleoresin.

9. Non-therapeutic use of a composition comprising, in a cosmetically acceptable medium, evodone in a concentration between 0.1 and 25% by weight relative to the total weight of the composition for repelling insects.

10. Composition, **characterised in that** it comprises, as an active agent for repelling insects, in particular, mosquitoes, an effective quantity of an extract of *Euodia suaveolens* Scheff such as defined in one of claims 1 to 8, and a cosmetically acceptable excipient.

11. Composition according to claim 10, **characterised in that** the content in extract is between 10 and 60% by weight relative to the total weight of the composition for a crude extract, and between 1 and 35% for a co-distilled refined extract.

12. Composition according to one of claims 10 to 11, **characterised in that** it is formulated to be applied topically to the skin in the form of milk, gel, cream, lotion, emulsion, spray, preferably spray.

13. Non-therapeutic use of evodone as an active agent intended to repel insects.

14. Non-therapeutic use of an extract of *Euodia suaveolens* Scheff according to one of claims 1 to 8, as an active agent for repelling insects.

15. Non-therapeutic use of a composition according to one of claims 10 to 12, for repelling insects.
